# EUROPEAN PATENT SPECIFICATION

(11) **EP 2 383 941 B1**
(45) Date of publication and mention of the grant of the patent: **17.05.2017**
(21) Application number: 09837320.2
(22) Date of filing: 10.09.2009
(51) Int. Cl.: H04L 12/54, H04L 29/06, H04L 29/08, H04N 21/44, H04N 21/43, H04N 21/6437

(54) **CLIENT TERMINAL, METHOD AND SYSTEM FOR DOWNLOADING STREAMING MEDIA**
CLIENT-ENDGERÄT SOWIE VERFAHREN UND SYSTEM ZUM HERUNTERLADEN VON STREAMING MEDIA
TERMINAL CLIENT, AINSI QUE PROCÉDÉ ET SYSTÈME DE TÉLÉCHARGEMENT DE FLUX MULTIMÉDIA

(30) Priority: 29.12.2008 CN 200810246897
(43) Date of publication of application: 02.11.2011
(73) Proprietor: ZTE Corporation, Shenzhen City, Guangdong Province 518057 (CN)
(72) Inventor: WU, Mingxing, Shenzhen City Guangdong Province 518057 (CN)
(74) Representative: Zerbi, Guido Maria
(86) International application number: PCT/CN2009/073863
(87) International publication number: WO 2010/078763

(56) References cited:
- EP-A2- 1 271 865
- CN-A- 1 972 444
- CN-A- 101 009 686
- CN-A- 101 217 638
- CN-A- 101 277 209
- CN-A- 101 459 693
- SHENG-TZONG CHENG ET AL: "Reliable Video Transmission Techniques for Wireless MPEG-4 Streaming Systems", DEPENDABLE COMPUTING, 2006. PRDC '06. 12TH PACIFIC RIM INTERNATIO NAL SYMPOSIUM ON, IEEE, PI, 1 December 2006 (2006-12-01), pages 248-258, XP031034226, ISBN: 978-0-7695-2724-6
- SCHULZRINNE COLUMBIA U A RAO NETSCAPE R LANPHIER REALNETWORKS H: "Real Time Streaming Protocol (RTSP); rfc2326.txt", 19980401, 1 April 1998 (1998-04-01), XP015008110, ISSN: 0000-0003

## Description

### Technical Field

The present invention relates to multimedia storage technology, and in particular, to a streaming media server, a client terminal, and a method and system for downloading streaming media source file.

### Background Art

A streaming media system is a typical system of a client terminal and a serving terminal, and a serving terminal is generally a streaming media server. A streaming media system supports streaming media services such as video on demand and live broadcast services, and a user can also download a streaming media source file using File Transfer Protocol (FTP), Hyper Text Transfer Protocol (HTTP) and the like when necessary.

However, loading streaming media content using FTP, HTTP and the like has the following drawbacks: streaming media content can only be downloaded with the aid of support of a server such as a FTP server and a HTTP server; it only supports download of the entire streaming media content and cannot meet a user's demand for only downloading the part of the streaming media content in which he is interested; a file cannot be displayed if it is not completely downloaded, i.e., the streaming media data that have already been stored in the file cannot be displayed normally when downloading is interrupted.

The document SHENG-TZONG CHENG ET AL: "Reliable Video Transmission Techniques for Wireless MPEG-4 Streaming Systems", 12TH PACIFIC RIM INTERNATIONAL SYMPOSIUM ON DEPENDABLE COMPUTING (PRDC'06), IEEE, PI, 1 December 2006, pages 248-258, discloses: the de-interleaving method is based on the initial RTP timestamp and the duration of one GOP. At the same time, we must prepare an additional de-interleaving buffer, called DINTBUFF to perform de-interleaving. The following steps are the main concept of de-interleaving. The steps of de-interleaving at client side are shown as follows: 1) Get all the RTP packets one-by-one, and extract the RTP timestamp in each RTP packet.2)...According to RTP timestamp, insert the RTP packet to the DINTBUFF. Note that the packet with the maximum RTP timestamp is inserted at the tail of DINTBUFF...we have buffered one GOP video datal.flush the sorted RTP packets into another queue. DECOBUFF...At the client side, the RTP packets are polled one-by-one, and inserted into the de-interleaving buffer (DINTBUFF) according to the RTP timestamp of RTP header (see Chapter 3.4 of D1).

The document EP 1271865 A2 discloses: a receiving terminal 100a for receiving content data transmitted from a sever to be played is provided with a time information storage processing unit 105a for generating not-yet-played range information Ir indicating a range of a not-yet-played in the content data on the basis of time information concerning the playback process, which information is added to the content data in predetermined data units (see abstract of D1). D1 further discloses "When receiving a message for requesting to change the server S as the data transmission source, the receiving terminal 100a transmits a message requesting the content data to a new transmission source server with adding the not-yet-played range information to the data.

### Summary of the Invention

Due to the above reasons, the main object of the present invention is to provide a streaming media server, a client terminal, and a method and system for downloading streaming media source file, which can ensure that the streaming media data that have already been downloaded can be normally displayed after downloading is interrupted.

In order to achieve the above object, the technical solution of the present invention is carried out as follows:

A method for downloading streaming media source file comprises:
a client terminal receiving and caching transmitted streaming media data of a streaming media source file carried by real-time transport protocol (RTP) packets through a streaming media session;
the client terminal sorting and framing the cached RTP packets; and the client terminal generating a file, writing framed data frames into the generated file.

Furthermore, the step of sorting and framing the cached RTP packets may comprise:
a. sorting the cached RTP packets;
b. searching out a first RTP packet carrying I-frame data from a sequence of RTP packets obtained by sorting; discarding RTP packets before the first RTP packet carrying I-frame data searched out in the sequence, and differentiating RTP packets carrying audio data from those carrying video data according to a PID field of a RTP packet starting from the first RTP packet carrying I-frame data that is searched out, and framing the RTP packets carrying audio and video data respectively.

Furthermore, the method further comprises:
the client terminal storing a timestamp of a data frame that is written into the file lastly when transmission is interrupted, and discarding the cached RTP packets that have not been framed into data frames;
the client terminal initiating a streaming media session establishment request by sending to a streaming media server a real-time streaming protocol describe (RTSP Describe) request carrying a URL address of a streaming media source file whose transmission is interrupted;
the client terminal sending to the streaming media server a RTSP play command carrying the stored timestamp;
the client terminal receiving and caching the streaming media data of the streaming media source file carried by RTP packets through the streaming media session, wherein said streaming media data are streaming media data that need to resume to be transmitted determined by the stored timestamp;
the client terminal sorting and framing the cached RTP packets; and
once a data frame is framed, the client terminal writing the frame of data into the file generated before transmission is interrupted.

Furthermore, the step of receiving and caching transmitted streaming media data of a streaming media source file carried by RTP packets through a streaming media session may comprise:
establishing the streaming media session;
sending to the streaming media server a RTSP play command carrying a starting time and an ending time of a selected portion for downloading in the streaming media source file; and
receiving and caching the RTP packets carrying the streaming media data transmitted by the streaming media server; wherein said streaming media data are streaming media data in the streaming media source file corresponding to a period from the starting time to the ending time.

Furthermore, the streaming media data that need to resume to be transmitted can be streaming media data in the streaming media source file corresponding to a period from the stored timestamp to the ending time.

The present invention also provides a client terminal, the client terminal is configured to receive and cache real-time transport protocol (RTP) packets carrying streaming media data transmitted by a streaming media server through a streaming media session; sort and frame the cached RTP packets; and generate a file and write framed data frames into the generated file; thereby achieving download of streaming media;
wherein the client terminal is configured to sort and frame the cached RTP packets by:
sorting the cached RTP packets;
searching out a first RTP packet carrying I-frame data from a sequence of RTP packets obtained by sorting; discarding RTP packets before the first RTP packet carrying I-frame data searched out in the sequence, and differentiating RTP packets carrying audio data from those carrying video data according to a PID field of a RTP packet starting from the first RTP packet carrying I-frame data that is searched out, and framing the RTP packets carrying audio and video data respectively.

Furthermore, the client terminal may comprise:
a first signaling generating unit configured to have signaling interaction with the streaming media server to establish the streaming media session;
a receiving unit configured to receive and cache the RTP packets;
a processing unit configured to sort and frame the cached RTP packets; and
a first storage unit configured to generate the file and write the framed data frames into the generated file.

Furthermore, the client terminal may further comprise:
a second storage unit configured to store a timestamp of a data frame that is written into the file lastly when transmission is interrupted; and
a second signaling generating unit configured to generate and send a RTSP play command carrying the stored timestamp; and generate and send a RTSP play command carrying a starting time and an ending time of a selected portion for downloading in the streaming media source file.

The present invention also provides a system for downloading streaming media, the system comprises a client terminal as described above and a streaming media server configured to transmit to a client terminal streaming media data carried by real-time transport protocol (RTP) packets through a streaming media session.

Furthermore, the streaming media server may comprise:
a first analyzing unit configured to have signaling interaction with the client terminal to establish a streaming media session; and
a transmitting module configured to obtain streaming media data required by the client terminal, transmit the obtained streaming media data to the client terminal by carrying said data with RTP packets.

Furthermore, the streaming media server may further comprise:
a second analyzing unit configured to analyze the RTSP play command carrying the stored timestamp to obtain the stored timestamp; and analyze the RTSP play command carrying a starting time and an ending time of a selected portion for downloading in the streaming media source file to obtain the starting time and ending time of a selected portion for downloading in the streaming media source file; and
a data identifying unit configured to determine streaming media data required by the client terminal to be transmitted according to the stored timestamp; and determine streaming media data required by the client terminal to be transmitted according to the starting time and ending time of a selected portion for downloading in the streaming media source file.

With the streaming media server, client terminal and method and system for downloading streaming media provided by the present invention, streaming media data are written into the file in sequence and they are not written until a frame is made, ensuring that each frame of data that is written into the file is complete and that the streaming media data that have already been downloaded can be displayed, i.e., the picture is continuous and clear, problems such as mosaic or picture interruption will not occur when downloading is interrupted. The present invention also has the following advantages and features:
1) the present invention can achieve download of a streaming media source file only through a streaming media server without any server such as a FTP server or a HTTP server;
2) in the present invention, the timestamp of the data frame that is written into the file lastly is stored after transmission is interrupted, and the streaming media data that need to resume to be transmitted are determined according to the stored timestamp and resume to be transmitted so that download of the streaming media source file can be completed by resuming transmission at the interruption point after transmission is interrupted;
3) in the present invention, the streaming media server is informed of the part of the streaming media source file in which a user is interested by setting a request time field so that the user can freely download the streaming media data of the part in the streaming media source file in which he is interested.

### Brief Description of Drawings

FIG. 1 is a flow for carrying out the method for downloading streaming media source file according to Example one of the present invention;
FIG. 2 is a flow for carrying out the method for downloading streaming media source file according to Example two of the present invention;
FIG. 3 illustrates the structure of the system for downloading streaming media source file according to Example three of the present invention.

### Preferred Embodiments of the Invention

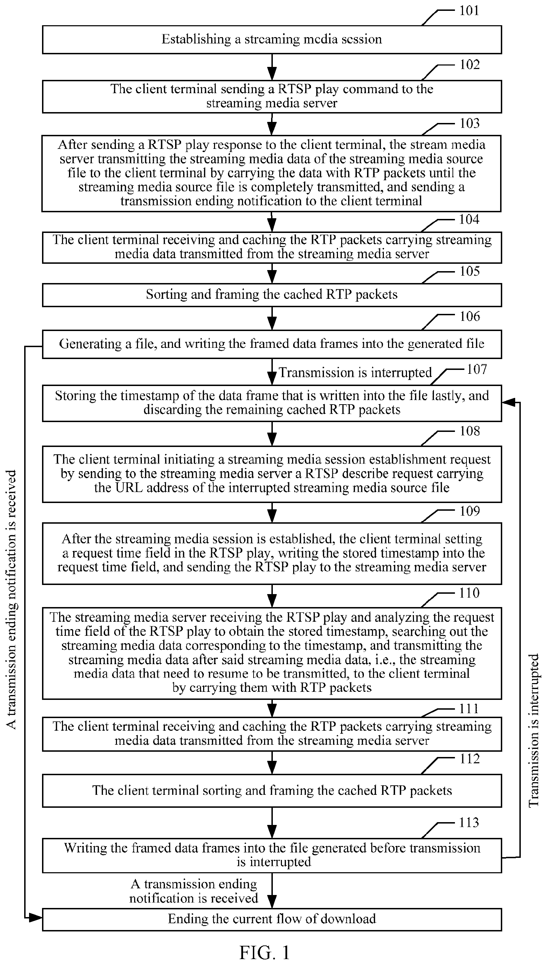

The method for downloading streaming media source file according to Example one of the present invention is carried out in the flow as shown in FIG. 1, comprising the following steps:
Step 101: a client terminal obtaining the Uniform Resource Locator (URL) address of the stream media source file to be downloaded from a streaming media server; sending to the streaming media server a real-time streaming protocol describe (RTSP Describe) request carrying the URL address; sending to the streaming media server a RTSP setup command after receiving a RTSP Describe response; completing establishment of a streaming media session after receiving a RTSP setup response. Establishment of the streaming media session complies with standard protocol requirements for RTSP.

Here, the streaming media source file can be displayed in the meantime of download, i.e., the streaming media data transmitted from the streaming media server can be displayed in the meantime of being cached, sorted, framed and written into the file without having to re-establish a streaming media session for download.

Step 102: the client terminal sending a RTSP play command to the stream media server; here, a transmission rate can also be defined by the RTSP play command, and the streaming media server is required to transmit streaming media data to the client terminal at that transmission rate.

Step 103: after sending a RTSP play response to the client terminal, the streaming media server transmitting the streaming media data of the streaming media source file to the client terminal by carrying the data with real-time transport protocol (RTP) packets until the streaming media source file is completely transmitted, and sending a transmission ending notification to the client terminal.

If transmission is not interrupted, execute steps 104-106 until a transmission ending notification is received when this flow of downloading is over, or the transmission is interrupted; if transmission is interrupted, execute steps 107-113.

Step 104: the client terminal receiving and caching the RTP packets carrying streaming media data transmitted from the streaming media server.

Wherein, the header of the RTP packet includes the following extended fields: the header of the RTP packet carrying I-frame data includes an I_frame_indicator field for indicating whether the RTP packet is the beginning, middle or ending of the I frame; a PID field for distinguishing video data from audio data; the header of the RTP packet includes a payload_unit_start_indicator field for indicating whether the RTP packet is the beginning of a frame of data.

Step 105: sorting and framing the cached RTP packets;

Said sorting and framing specifically comprises the following steps:
a, sorting the cached RTP packets; here, the purpose of sorting is to avoid disorder of transmission, which may otherwise affect framing;
b, searching out the first RTP packet carrying I-frame data from a sequence of RTP packets obtained from sorting according to the I_frame_indicator field of the RTP packets; discarding the RTP packets in the sequence before the RTP packet searched out in the sequence, and differentiating RTP packets carrying audio data from those carrying video data according to a PID field of a RTP packet starting from the RTP packet that is searched out, and framing the RTP packets carrying audio and video data respectively;

Here, said framing the RTP packets carrying audio and video data respectively specifically comprises the following steps:
searching out the RTP packet carrying video data whose payload_unit_start_indicator field is 1 from the sequence of RTP packets as the packet where the header of a video frame is located, framing each packet where the header of a video frame is located and the RTP packets carrying video data with removal of the header before the next packet where the header of a video frame is located into a frame in sequence;
searching out the RTP packet carrying audio data whose payload_unit_start_indicator field is 1 from the sequence of RTP packets as the packet where the header of an audio frame is located, framing each packet where the header of an audio frame is located and the RTP packets carrying audio data with removal of the header before the next packet where the header of an audio frame is located into a frame in sequence.

Step 106: generating a file, and writing the framed data frames into the generated file.

Step 107: after transmission is interrupted, the client terminal storing the timestamp of the data frame that is written into the file lastly, and discarding the cached RTP packets;

The streaming media data are written into the file in sequence through steps 105 and 106, and they are not written until a frame is made, ensuring that each frame of data that is written into the file is complete; step 107 ensures that when transmission is interrupted, the first frame of data stored in the file is also a plurality of complete and continuous data frames of I frame, which ensures normal display and that problems such as mosaic or picture interruption will not occur just because the first frame is not a key frame, therefore, the file can still be normally displayed after transmission is interrupted.

Step 108: the client terminal initiating a streaming media session establishment request by sending to the streaming media server a RTSP Describe request carrying the URL address of the interrupted streaming media source file.

Step 109: after the streaming media session is established, the client terminal setting a request time field in the RTSP play, writing the stored timestamp into the request time field, and sending the RTSP play to the streaming media server.

If transmission is not interrupted again, execute steps 111-113 until a transmission ending notification is received when this flow of downloading is over, or the transmission is interrupted again; if transmission is interrupted again, return to step 107 to resume transmission again and proceed with the current download task.

Step 110: the streaming media server receiving the RTSP play and analyzing the request time field of the RTSP play to obtain the timestamp stored by the client terminal, searching out the streaming media data corresponding to the timestamp, and transmitting the streaming media data after said streaming media data, i.e., the streaming media data that need to resume to be transmitted, to the client terminal by carrying them with RTP packets.

Step 111: the client terminal receiving and caching the RTP packets carrying streaming media data transmitted from the streaming media server.

Step 112: the client terminal sorting and framing the cached RTP packets; the specific steps for sorting and framing here are the same with those in step 105, and thus will not be described repeatedly here.

Step 113: writing the framed data frames into the file generated before transmission is interrupted.

In steps 107-113, after transmission is interrupted, the timestamp of the data frame that is written into the file lastly is stored, and the interruption point is searched according to the stored timestamp to determine and then resume to transmit the streaming media data that need to resume to be transmitted so that download of the streaming media source file can be completed by resuming transmission at the interruption point after transmission is interrupted.

In step 101-113, after a streaming media session is established through signaling interaction between the client terminal and the streaming media server, the streaming media server transmits streaming media data to the client terminal, and the client terminal caches, sorts, frames the streaming media data and writes them into a file. Since the entire flow of downloading does not use protocols such as FTP and HTTP, download of streaming media is achieved without servers except the streaming media server.

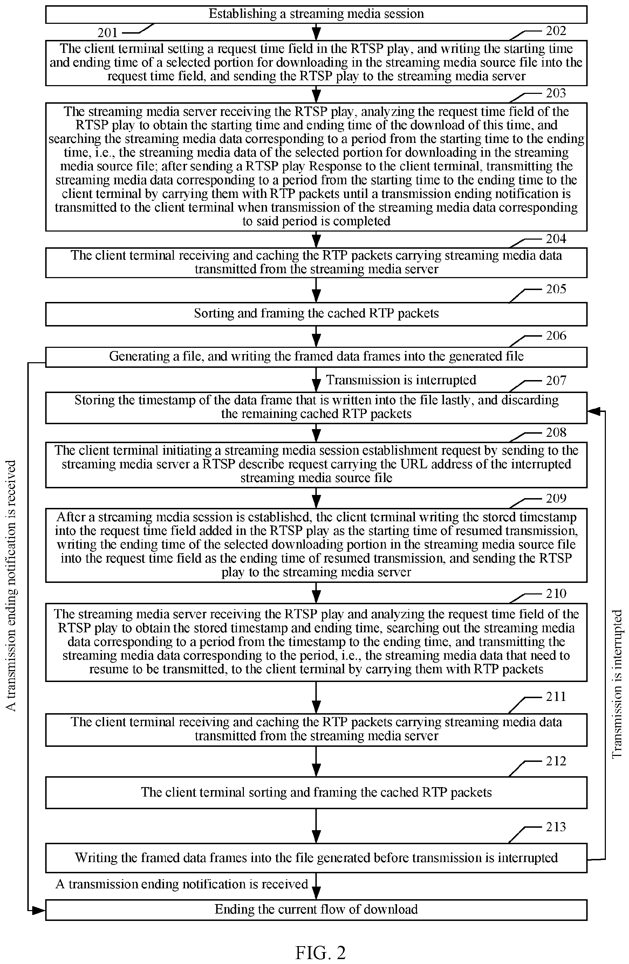

The method for downloading streaming media source file according to Example two of the present invention is carried out in the flow as shown in FIG. 2, comprising the following steps:
Step 201: a client terminal obtaining the URL address of the streaming media source file from a streaming media server; sending to the streaming media server a RTSP Describe request carrying the URL address; sending to the streaming media server a RTSP setup command after receiving a RTSP describe response; completing establishment of a streaming media session after receiving a RTSP setup response. Establishment of the streaming media session complies with standard protocol requirements for RTSP.

Step 202: the client terminal setting a request time field in the RTSP play, and writing the starting time and ending time of a selected portion for downloading in the streaming media source file into the request time field, and sending the RTSP play to the streaming media server; here, a transmission rate can also be defined by the RTSP play, and the streaming media server is required to transmit streaming media data to the client terminal at that transmission rate.

Step 203: the streaming media server receiving the RTSP play, analyzing the request time field of the RTSP play to obtain the starting time and ending time of the download of this time, and searching the streaming media data corresponding to a period from the starting time to the ending time, i.e., the streaming media data of the selected portion for downloading in the streaming media source file; after sending a RTSP play Response to the client terminal, transmitting the streaming media data corresponding to a period from the starting time to the ending time to the client terminal by carrying them with RTP packets until a transmission ending notification is transmitted to the client terminal when transmission of the streaming media data corresponding to said period is completed.

In steps 202 and 203, the streaming media server is informed of the part of the streaming media source file in which a user is interested, i.e., the selected portion for downloading in the streaming media source file, by setting a request time field, and is required to transmit the streaming media data of the selected portion for downloading, so that the user can freely download the streaming media data of the part in the streaming media source file in which he is interested.

If transmission is not interrupted, execute steps 204-206 until a transmission ending notification is received when this flow of downloading is over, or the transmission is interrupted; if transmission is interrupted, execute steps 207-213.

Step 204: the client terminal receiving and caching the RTP packets carrying streaming media data transmitted from the streaming media server.

Wherein, the header of the RTP packet includes the following extended fields: the header of the RTP packet carrying I-frame data includes an I_frame_indicator field for indicating whether the RTP packet is the beginning, middle or ending of the I frame; the header of the RTP packet carrying video data includes a video_PID field for depositing a video PID value; the header of the RTP packet carrying audio data includes an audio_PID field for depositing an audio PID value; the header of the RTP packet includes a payload_unit_start_indicator field for indicating whether the RTP packet is the beginning of a frame of data.

Step 205: sorting and framing the cached RTP packets;

Said sorting and framing specifically comprises the following steps:
a, sorting the cached RTP packets; here, the purpose of sorting is to avoid disorder of transmission, which may otherwise affect framing;
b, searching out the first RTP packet carrying I-frame data from a sequence of RTP packets obtained from sorting according to the I_frame_indicator field of the RTP packets; discarding the RTP packets in the sequence before the RTP packet searched out in the sequence, and differentiating RTP packets carrying audio data from those carrying video data according to a PID field of a RTP packet starting from the RTP packet that is searched out, and framing the RTP packets carrying audio and video data respectively;

Here, said framing the RTP packets carrying audio and video data respectively specifically comprises the following steps:
searching out the RTP packet carrying video data whose payload_unit_start_indicator field is 1 from the sequence of RTP packets as the packet where the header of a video frame is located, framing each packet where the header of a video frame is located and the RTP packets carrying video data before the next packet where the header of a video frame is located into a frame in sequence;
searching out the RTP packet carrying audio data whose payload_unit_start_indicator field is 1 from the sequence of RTP packets as the packet where the header of an audio frame is located, framing each packet where the header of an audio frame is located and the RTP packets carrying audio data with removal of the header before the next packet where the header of an audio frame is located into a frame in sequence.

Step 206: generating a file, and writing the framed data frames into the generated file.

Step 207: after transmission is interrupted, the client terminal storing the timestamp of the data frame that is written into the file lastly, and discarding the cached RTP packets;

The streaming media data are written into the file in sequence through steps 205 and 206, and they are not written until a frame is made, ensuring that each frame of data that is written into the file is complete; step 207 ensures that when transmission is interrupted, the first frame of data stored in the file is also a plurality of complete and continuous data frames of I frame, which ensures normal display and a clear and continuous picture can be shown without any problem such as mosaic or picture interruption, therefore, the file can still be normally displayed after transmission is interrupted.

Step 208: the client terminal initiating a streaming media session establishment request by sending to the streaming media server a RTSP Describe request carrying the URL address of the interrupted streaming media source file.

Step 209: after a streaming media session is established, the client terminal writing the stored timestamp into the request time field added in the RTSP play as the starting time of resumed transmission, writing the ending time of the selected portion for downloading in the streaming media source file into the request time field as the ending time of resumed transmission, and sending the RTSP play to the streaming media server;

If transmission is not interrupted again, execute steps 211-213 until a transmission ending notification is received when this flow of downloading is over, or the transmission is interrupted again; if transmission is interrupted again, return to step 207 to resume transmission again and proceed with the current download task.

Step 210: the streaming media server receiving the RTSP play and analyzing the request time field of the RTSP play to obtain the timestamp and ending time stored by the client terminal, searching out the streaming media data corresponding to a period from the timestamp to the ending time, and transmitting the streaming media data corresponding to the period, i.e., the streaming media data that need to resume to be transmitted, to the client terminal by carrying them with RTP packets.

Step 211: the client terminal receiving and caching the RTP packets carrying streaming media data transmitted from the streaming media server.

Step 212: the client terminal sorting and framing the cached RTP packets; the specific procedure for sorting and framing here are the same as described in step 205, and thus will not be described repeatedly.

Step 213: writing the framed data frames into the file generated before transmission is interrupted.

In steps 207-213, after transmission is interrupted, the timestamp of the data frame that is written into the file lastly is stored, the interruption point is searched according to the stored timestamp to determine the starting streaming media data that need to resume to be transmitted , and the streaming media data that need to resume to be transmitted is transmitted so that download of the streaming media source file can be completed by resuming transmission at the interruption point after transmission is interrupted.

In step 201-213, after a streaming media session is established through signaling interaction between the client terminal and the streaming media server, the client terminal informs the streaming media server of the selected portion for downloading in the streaming media source file; the streaming media server transmits the streaming media data of the selected portion for downloading to the client terminal, and the client terminal caches, sorts, frames the streaming media data and writes them into a file. Since the entire flow of downloading does not use protocols such as FTP and HTTP, download of streaming media is achieved without servers except the streaming media server.

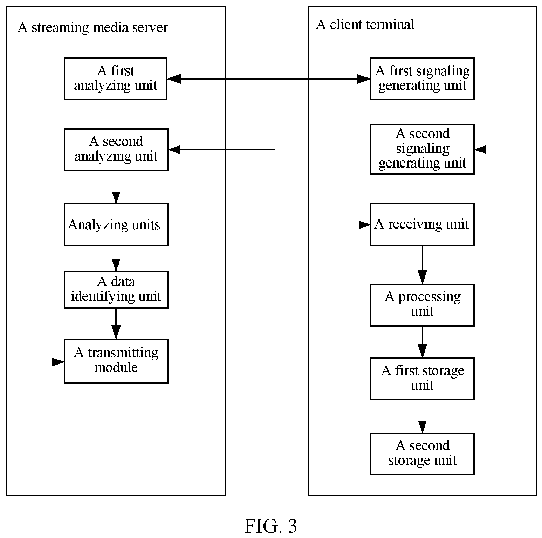

The structure of the system for downloading streaming media source file according to Example three of the present invention is as show in FIG. 3, and the system comprises:
a streaming media server used for transmitting streaming media data carried with RTP packets through a streaming media session;
a client terminal used for receiving and caching the RTP packets; for sorting and framing the cached RTP packets; and for generating a file and writing the framed data frames into the generated file.

Wherein, the streaming media server comprises:
a first analyzing unit used to have signaling interaction with the client terminal to establish a streaming media session;
a transmitting module used to obtain streaming media data required by the client terminal, and transmit the obtained streaming media data to the client terminal by carrying them with RTP packets.

The client terminal further comprises:
a first signaling generating unit used to have signaling interaction with the streaming media server to establish a streaming media session;
a receiving unit used to receive and cache the RTP packets;
a processing unit used to sort and frame the cached RTP packets; and
a first storage unit used to generate a file and write framed data frames into the generated file.

The client terminal further comprises:
a second storage unit used to store a timestamp of a data frame that is written into the file lastly when transmission is interrupted; and
a second signaling generating unit used to generate and send a RTSP play command carrying the stored timestamp; and generate and send a RTSP play command carrying a starting time and an ending time of a selected portion for downloading in the streaming media source file.

The streaming media server further comprises:
a second analyzing unit used to analyze the RTSP play command carrying the stored timestamp to obtain the stored timestamp; and analyze the RTSP play command carrying a starting time and an ending time of a selected portion for downloading in the streaming media source file to obtain the starting time and ending time of a selected portion for downloading in the streaming media source file; and
a data identifying unit used to determine streaming media data required by the client terminal to be transmitted according to the stored timestamp; and determine streaming media data required by the client terminal to be transmitted according to the starting time and ending time of a selected portion for downloading in the streaming media source file.

The data that can be downloaded using the method and system of the present invention are not limited to RTP/RTCP/User Datagram Protocol (UDP) type of data, and applies to a plurality of transmission environments such as wire and wireless networks.

What are described above is only preferred examples of the present invention and are not intended to limit the protection scope of the present invention, which is defined by the claims.

### Industrial Applicability

With the streaming media server, client terminal and method and system for downloading streaming media provided by the present invention, streaming media data are written into the file in sequence and they are not written until a frame is made, ensuring that each frame of data that is written into the file is complete and that the streaming media data that have already been downloaded can be displayed, i.e., the picture is continuous and clear, problems such as mosaic or picture interruption will not occur when downloading is interrupted. The present invention also has the following advantages and features:
1) the present invention can achieve download of a streaming media source file only through a streaming media server without any server such as a FTP server or a HTTP server;
2) in the present invention, the timestamp of the data frame that is written into the file lastly is stored after transmission is interrupted, and the streaming media data that need to resume to be transmitted are determined according to the stored timestamp and resume to be transmitted so that download of the streaming media source file can be completed by resuming transmission at the interruption point after transmission is interrupted;
3) in the present invention, the streaming media server is informed of the part of the streaming media source file in which a user is interested by setting a request time field so that the user can freely download the streaming media data of the part in the streaming media source file in which he is interested.

## Claims

1. A method for downloading a streaming media source file, comprising: a client terminal receiving and caching transmitted streaming media data of a streaming media source file carried by real-time transport protocol, RTP, packets through a streaming media session (104, 204), wherein the method further comprises:
the client terminal sorting and framing the cached RTP packets (105, 205) ; and
the client terminal generating a file, writing framed data frames into the generated file (106, 206) ;
wherein the step of sorting and framing the cached RTP packets comprises:
a. sorting the cached RTP packets;
b. searching out a first RTP packet carrying I-frame data from a sequence of RTP packets obtained by sorting; discarding RTP packets before the first RTP packet carrying I-frame data searched out in the sequence, and differentiating RTP packets carrying audio data from those carrying video data according to a PID field of an RTP packet starting from the first RTP packet carrying I-frame data that is searched out, and framing the RTP packets carrying audio and video data respectively.

2. The method according to claim 1, further comprising:
the client terminal storing a timestamp of a data frame that is written into the file lastly when transmission is interrupted, and discarding the cached RTP packets that have not been framed into data frames (107, 207) ;
the client terminal initiating a streaming media session establishment request by sending to a streaming media server a real-time streaming protocol describe, RTSP Describe, request carrying a URL address of a streaming media source file whose transmission is interrupted (108, 208) ;
the client terminal sending to the streaming media server a RTSP play command carrying the stored timestamp (109, 209) ;
the client terminal receiving and caching the streaming media data of the streaming media source file carried by RTP packets through the streaming media session, wherein said streaming media data are streaming media data that need to resume to be transmitted determined by the stored timestamp (111,211) ;
the client terminal sorting and framing the cached RTP packets (112, 212) ; and
once a data frame is framed, the client terminal writing the frame of data into the file generated before transmission is interrupted (113, 213).

3. The method according to claim 1, wherein the step of receiving and caching transmitted streaming media data of a streaming media source file carried by RTP packets through a streaming media session comprises:
establishing the streaming media session (201) ;
sending to the streaming media server a RTSP play command carrying a starting time and an ending time of a selected portion for downloading in the streaming media source file; (202) and
receiving and caching the RTP packets carrying the streaming media data transmitted by the streaming media server; wherein said streaming media data are streaming media data in the streaming media source file corresponding to a period from the starting time to the ending time (203) .

4. The method according to claim 2, wherein the step of said receiving and caching streaming media data of a streaming media source file carried by RTP packets through a streaming media session comprises:
establishing the streaming media session (201) ;
sending to the streaming media server a RTSP play command carrying a starting time and an ending time of a selected portion for downloading in the streaming media source file (202) ; and
receiving and caching the RTP packets carrying the streaming media data transmitted by the streaming media server; wherein said streaming media data are streaming media data in the streaming media source file corresponding to a period from the starting time to the ending time (203) .

5. The method according to claim 4, wherein the streaming media data that need to resume to be transmitted can be streaming media data in the streaming media source file corresponding to a period from the stored timestamp to the ending time.

6. A client terminal configured to receive and cache real-time transport protocol, RTP, packets carrying streaming media data transmitted by a streaming media server through a streaming media session, wherein the client terminal is further configured to sort and frame the cached RTP packets; and generate a file and write framed data frames into the generated file; thereby achieving download of streaming media;
wherein the client terminal is configured to sort and frame the cached RTP packets by:
sorting the cached RTP packets; and
searching out a first RTP packet carrying I-frame data from a sequence of RTP packets obtained by sorting; discarding RTP packets before the first RTP packet carrying I-frame data searched out in the sequence, and differentiating RTP packets carrying audio data from those carrying video data according to a PID field of an RTP packet starting from the first RTP packet carrying I-frame data that is searched out, and framing the RTP packets carrying audio and video data respectively.

7. The client terminal according to claim 6, comprising:
a first signaling generating unit configured to have signaling interaction with the streaming media server to establish the streaming media session;
a receiving unit configured to receive and cache the RTP packets;
a processing unit configured to sort and frame the cached RTP packets; and
a first storage unit configured to generate the file and write the framed data frames into the generated file.

8. The client terminal according to claim 7, further comprising:
a second storage unit configured to store a timestamp of a data frame that is written into the file lastly when transmission is interrupted; and
a second signaling generating unit configured to generate and send a RTSP play command carrying the stored timestamp; and generate and send a RTSP play command carrying a starting time and an ending time of a selected portion for downloading in the streaming media source file.

9. A system for downloading streaming media source file, comprising a streaming media server configured to transmit to a client terminal streaming media data carried by real-time transport protocol, RTP, packets through a streaming media session, wherein the system also comprises a client terminal as described in any of claims 6-8.

10. The system according to claim 9, wherein the streaming media server comprises:
a first analyzing unit configured to have signaling interaction with the client terminal to establish a streaming media session; and
a transmitting module configured to obtain streaming media data required by the client terminal, transmit the obtained streaming media data to the client terminal by carrying said data with RTP packets.

11. The system according to claim 10, wherein the streaming media server further comprises:
a second analyzing unit configured to analyze the RTSP play command carrying the stored timestamp to obtain the stored timestamp; and analyze the RTSP play command carrying a starting time and an ending time of a selected portion for downloading in the streaming media source file to obtain the starting time and ending time of a selected portion for downloading in the streaming media source file; and
a data identifying unit configured to determine streaming media data required by the client terminal to be transmitted according to the stored timestamp; and determine streaming media data required by the client terminal to be transmitted according to the starting time and ending time of a selected portion for downloading in the streaming media source file.

## Patentansprüche

1. Ein Verfahren zum Herunterladen einer Streaming-Media-Quelldatei, beinhaltend:
Empfangen und In-den-Cachespeicher-Aufnehmen, durch ein Client-Endgerät, von übertragenen Streaming-Media-Daten einer Streaming-Media-Quelldatei, getragen von Echtzeit-Transportprotokoll-Paketen, RTP-Paketen, durch eine Streaming-Media-Sitzung (104, 204),
wobei das Verfahren ferner Folgendes beinhaltet:
Sortieren und Rahmen, durch das Client-Endgerät, der in den Cachespeicher aufgenommenen RTP-Pakete (105, 205); und
Erzeugen einer Datei, Schreiben von gerahmten Datenrahmen in die erzeugte Datei durch das Client-Endgerät (106, 206);
wobei der Schritt des Sortierens und Rahmens der in den Cachespeicher aufgenommenen RTP-Pakete Folgendes beinhaltet:
a. Sortieren der in den Cachespeicher aufgenommenen RTP-Pakete;
b. Heraussuchen eines ersten I-Rahmendaten tragenden RTP-Pakets aus einer durch Sortieren erhaltenen Sequenz von RTP-Paketen; Verwerfen von RTP-Paketen vor dem herausgesuchten ersten I-Rahmendaten tragenden RTP-Paket in der Sequenz und Differenzieren der Audiodaten tragenden RTP-Pakete von den Videodaten tragenden gemäß einem PID-Feld eines RTP-Pakets, ausgehend von dem ersten I-Rahmendaten tragenden RTP-Paket, das herausgesucht ist, und entsprechendes Rahmen der Audio- und Videodaten tragenden RTP-Pakete.

2. Verfahren gemäß Anspruch 1, das ferner Folgendes beinhaltet:
Speichern, durch das Client-Endgerät, eines Zeitstempels eines Datenrahmens, der zuletzt in die Datei geschrieben wird, wenn die Übertragung unterbrochen wird, und Verwerfen der in den Cachespeicher aufgenommenen RTP-Pakete, die nicht zu Datenrahmen gerahmt wurden (107, 207);
Initiieren, durch das Client-Endgerät, einer Etablierungsanforderung für eine Streaming-Media-Sitzung durch Senden einer Beschreibungsanforderung eines Echtzeit-Streamingprotokolls, RTSP Describe, die eine URL-Adresse einer Streaming-Media-Quelldatei trägt, deren Übertragung unterbrochen ist (108, 208), an einen Streaming-Media-Server;
Senden, durch das Client-Endgerät, eines RTSP-Abspielbefehls, der den gespeicherten Zeitstempel trägt, an den Streaming-Media-Server (109, 209);
Empfangen und In-den-Cachespeicher-Aufnehmen, durch das Client-Endgerät, der Streaming-Media-Daten der Streaming-Media-Quelldatei, getragen von RTP-Paketen durch die Streaming-Media-Sitzung, wobei es sich bei den Streaming-Media-Daten um Streaming-Media-Daten handelt, deren Übertragung wiederaufgenommen werden muss, bestimmt durch den gespeicherten Zeitstempel (111, 211);
Sortieren und Rahmen, durch das Client-Endgerät, der in den Cachespeicher aufgenommenen RTP-Pakete (112, 212); und
wenn ein Datenrahmen gerahmt ist, Schreiben, durch das Client-Endgerät, des Rahmens von Daten in die vor der Unterbrechung der Übertragung erzeugte Datei (113,213).

3. Verfahren gemäß Anspruch 1, wobei der Schritt des Empfangens und In-den-Cachespeicher-Aufnehmens von übertragenen Streaming-Media-Daten einer Streaming-Media-Quelldatei, getragen von RTP-Paketen durch eine Streaming-Media-Sitzung, Folgendes beinhaltet:
Etablieren der Streaming-Media-Sitzung (201);
Senden eines RTSP-Abspielbefehls, der eine Startzeit und eine Endzeit eines ausgewählten Teils zum Herunterladen in der Streaming-Media-Quelldatei trägt, an den Streaming-Media-Server (202); und
Empfangen und In-den-Cachespeicher-Aufnehmen der RTP-Pakete, welche die von dem Streaming-Media-Server übertragenen Streaming-Media-Daten tragen; wobei es sich bei den Streaming-Media-Daten um Streaming-Media-Daten in der Streaming-Media-Quelldatei handelt, die einem Zeitraum von der Startzeit zu der Endzeit entsprechen (203).

4. Verfahren gemäß Anspruch 2, wobei der Schritt des Empfangens und In-den-Cachespeicher-Aufnehmens von Streaming-Media-Daten einer Streaming-Media-Quelldatei, getragen von RTP-Paketen durch eine Streaming-Media-Sitzung, Folgendes beinhaltet:
Etablieren der Streaming-Media-Sitzung (201);
Senden eines RTSP-Abspielbefehls, der eine Startzeit und eine Endzeit eines ausgewählten Teils zum Herunterladen in der Streaming-Media-Quelldatei trägt, an den Streaming-Media-Server (202); und
Empfangen und In-den-Cachespeicher-Aufnehmen der RTP-Pakete, welche die von dem Streaming-Media-Server übertragenen Streaming-Media-Daten tragen; wobei es sich bei den Streaming-Media-Daten um Streaming-Media-Daten in der Streaming-Media-Quelldatei handelt, die einem Zeitraum von der Startzeit bis zu der Endzeit entsprechen (203).

5. Verfahren gemäß Anspruch 4, wobei es sich bei den Streaming-Media-Daten, deren Übertragung wiederaufgenommen werden muss, um Streaming-Media-Daten in der Streaming-Media-Quelldatei handeln kann, die einem Zeitraum von dem gespeicherten Zeitstempel bis zu der Endzeit entsprechen.

6. Ein Client-Endgerät, das konfiguriert ist, um Echtzeit-Transportprotokoll-Pakete, RTP-Pakete, die von einem Streaming-Media-Server durch eine Streaming-Media-Sitzung übertragene Streaming-Media-Daten tragen, zu empfangen und in den Cachespeicher aufzunehmen, wobei das Client-Endgerät ferner konfiguriert ist, um die in den Cachespeicher aufgenommenen RTP-Pakete zu sortieren und zu rahmen; und eine Datei zu erzeugen und gerahmte Datenrahmen in die erzeugte Datei zu schreiben; dadurch das Herunterladen von Streaming Media zu erreichen;
wobei das Client-Endgerät konfiguriert ist, um die in den Cachespeicher aufgenommenen RTP-Pakete durch Folgendes zu sortieren und zu rahmen:
Sortieren der in den Cachespeicher aufgenommenen RTP-Pakete; und
Heraussuchen eines ersten I-Rahmendaten tragenden RTP-Pakets aus einer durch Sortieren erhaltenen Sequenz von RTP-Paketen; Verwerfen von RTP-Paketen vor dem herausgesuchten ersten I-Rahmendaten tragenden RTP-Paket in der Sequenz und Differenzieren der Audiodaten tragenden RTP-Pakete von den Videodaten tragenden gemäß einem PID-Feld eines RTP-Pakets, ausgehend von dem ersten I-Rahmendaten tragenden RTP-Paket, das herausgesucht ist, und entsprechendes Rahmen der Audio- und Videodaten tragenden RTP-Pakete.

7. Client-Endgerät gemäß Anspruch 6, beinhaltend:
eine erste Signalisierung erzeugende Einheit, die konfiguriert ist, um eine Signalisierungswechselwirkung mit dem Streaming-Media-Server zum Etablieren der Streaming-Media-Sitzung einzugehen;
eine Empfangseinheit, die konfiguriert ist, um die RTP-Pakete zu empfangen und in den Cachespeicher aufzunehmen;
eine Verarbeitungseinheit, die konfiguriert ist, um die in den Cachespeicher aufgenommenen RTP-Pakete zu sortieren und zu rahmen; und
eine erste Speicherungseinheit, die konfiguriert ist, um die Datei zu erzeugen und die gerahmten Datenrahmen in die erzeugte Datei zu schreiben.

8. Client-Endgerät gemäß Anspruch 7, ferner beinhaltend:
eine zweite Speicherungseinheit, die konfiguriert ist, um einen Zeitstempel eines Datenrahmens, der zuletzt in die Datei geschrieben wird, wenn die Übertragung unterbrochen wird, zu speichern; und
eine zweite Signalisierung erzeugende Einheit, die konfiguriert ist, um einen RTSP-Abspielbefehl, der den gespeicherten Zeitstempel trägt, zu erzeugen und zu senden;
und um einen RTSP-Abspielbefehl, der eine Startzeit und eine Endzeit eines ausgewählten Teils zum Herunterladen in der Streaming-Media-Quelldatei trägt, zu erzeugen und zu senden.

9. Ein System zum Herunterladen einer Streaming-Media-Quelldatei, beinhaltend einen Streaming-Media-Server, der konfiguriert ist, um von Echtzeit-Transportprotokoll-Paketen, RTP-Paketen, durch eine Streaming-Media-Sitzung getragenen Streaming-Media-Daten an ein Client-Endgerät zu übertragen, wobei das System auch ein Client-Endgerät, wie in den Ansprüchen 6-8 beschrieben, beinhaltet.

10. System gemäß Anspruch 9, wobei der Streaming-Media-Server Folgendes beinhaltet:
eine erste Analysiereinheit, die konfiguriert ist, um eine Signalisierungswechselwirkung mit dem Client-Endgerät zum Etablieren einer Streaming-Media-Sitzung einzugehen; und
ein Übertragungsmodul, das konfiguriert ist, um von dem Client-Endgerät angeforderte Streaming-Media-Daten zu erhalten, die erhaltenen Streaming-Media-Daten durch das Tragen der Daten mit RTP-Paketen an das Client-Endgerät zu übertragen.

11. System gemäß Anspruch 10, wobei der Streaming-Media-Server ferner Folgendes beinhaltet:
eine zweite Analysiereinheit, die konfiguriert ist, um den RTSP-Abspielbefehl, der den gespeicherten Zeitstempel trägt, zum Erhalten des gespeicherten Zeitstempels zu analysieren; und um den RTSP-Abspielbefehl, der eine Startzeit und eine Endzeit eines ausgewählten Teils zum Herunterladen in der Streaming-Media-Quelldatei trägt, zum Erhalten der Startzeit und Endzeit eines ausgewählten Teils zum Herunterladen in der Streaming-Media-Quelldatei zu analysieren; und
eine Datenidentifizierungseinheit, die konfiguriert ist, um von dem Client-Endgerät zur Übertragung gemäß dem gespeicherten Zeitstempel angeforderte Streaming-Media-Daten zu bestimmen; und um von dem Client-Endgerät zur Übertragung gemäß der Startzeit und Endzeit eines ausgewählten Teils zum Herunterladen in der Streaming-Media-Quelldatei angeforderte Streaming-Media-Daten zu bestimmen.

## Revendications

1. Un procédé pour télécharger un fichier source de flux multimédia, comprenant :
la réception et la mise en antémémoire par un terminal client de données de flux multimédia transmises d'un fichier source de flux multimédia transporté par des paquets, RTP, de protocole de transport en temps réel par le biais d'une session de flux multimédia (104, 204), où le procédé comprend en outre :
le tri et le tramage par le terminal client des paquets RTP mis en antémémoire (105, 205) ; et
la génération par le terminal client d'un fichier, l'écriture de trames de données tramées dans le fichier généré (106, 206) ;
où l'étape consistant à trier et tramer les paquets RTP mis en antémémoire comprend :
a. le tri des paquets RTP mis en antémémoire ;
b. la recherche d'un premier paquet RTP transportant des données de trame I dans une séquence de paquets RTP obtenus par tri ; le rejet des paquets RTP précédant le premier paquet RTP transportant des données de trame I recherché dans la séquence, et la différentiation des paquets RTP transportant des données audio de ceux transportant des données vidéo selon un champ PID d'un paquet RTP en commençant à partir du premier paquet RTP transportant des données de trame I qui est recherché, et le tramage des paquets RTP transportant des données audio et vidéo respectivement.

2. Le procédé selon la revendication 1, comprenant en outre :
le stockage par le terminal client d'une estampille d'une trame de données qui est écrite dans le fichier en dernier quand une transmission est interrompue, et le rejet des paquets RTP mis en antémémoire qui n'ont pas été tramés en trames de données (107, 207) ;
le déclenchement par le terminal client d'une requête d'établissement de session de flux multimédia par l'envoi à un serveur de flux multimédia d'une requête, RTSP Describe, de description de protocole de flux en temps réel transportant une adresse URL d'un fichier source de flux multimédia dont la transmission est interrompue (108, 208) ;
l'envoi par le terminal client au serveur de flux multimédia d'une commande de lecture RTSP transportant l'estampille stockée (109, 209) ;
la réception et la mise en antémémoire par le terminal client des données de flux multimédia du fichier source de flux multimédia transporté par des paquets RTP par le biais de la session de flux multimédia, où lesdites données de flux multimédia sont des données de flux multimédia qui doivent recommencer à être transmises comme déterminé par l'estampille stockée (111, 211) ;
le tri et le tramage par le terminal client des paquets RTP mis en antémémoire (112, 212) ; et
une fois qu'une trame de données est tramée, l'écriture par le terminal client de la trame de données dans le fichier généré avant que la transmission ne soit interrompue (113,213).

3. Le procédé selon la revendication 1, où l'étape consistant à recevoir et à mettre en antémémoire des données de flux multimédia transmises d'un fichier source de flux multimédia transporté par des paquets RTP par le biais d'une session de flux multimédia comprend :
l'établissement de la session de flux multimédia (201) ;
l'envoi au serveur de flux multimédia d'une commande de lecture RTSP transportant un temps de commencement et un temps de fin d'une partie sélectionnée en vue d'un téléchargement dans le fichier source de flux multimédia (202) ; et
la réception et la mise en antémémoire des paquets RTP transportant les données de flux multimédia transmises par le serveur de flux multimédia ; où lesdites données de flux multimédia sont des données de flux multimédia dans le fichier source de flux multimédia correspondant à une période allant du temps de commencement au temps de fin (203).

4. Le procédé selon la revendication 2, où l'étape consistant à ladite réception et ladite mise en antémémoire des données de flux multimédia d'un fichier source de flux multimédia transporté par des paquets RTP par le biais d'une session de flux multimédia comprend :
l'établissement de la session de flux multimédia (201) ;
l'envoi au serveur de flux multimédia d'une commande de lecture RTSP transportant un temps de commencement et un temps de fin d'une partie sélectionnée en vue d'un téléchargement dans le fichier source de flux multimédia (202) ; et
la réception et la mise en antémémoire des paquets RTP transportant les données de flux multimédia transmises par le serveur de flux multimédia ; où lesdites données de flux multimédia sont des données de flux multimédia dans le fichier source de flux multimédia correspondant à une période allant du temps de commencement au temps de fin (203).

5. Le procédé selon la revendication 4, où les données de flux multimédia qui doivent recommencer à être transmises peuvent être des données de flux multimédia dans le fichier source de flux multimédia correspondant à une période allant de l'estampille stockée au temps de fin.

6. Un terminal client configuré pour recevoir et mettre en antémémoire des paquets, RTP, de protocole de transport en temps réel transportant des données de flux multimédia transmises par un serveur de flux multimédia par le biais d'une session de flux multimédia, où le terminal client est en outre configuré pour trier et tramer les paquets RTP mis en antémémoire ; et générer un fichier et écrire des trames de données tramées dans le fichier généré ; aboutissant ainsi à un téléchargement de flux multimédia ;
où le terminal client est configuré pour trier et tramer les paquets RTP mis en antémémoire en :
triant les paquets RTP mis en antémémoire ; et
recherchant un premier paquet RTP transportant des données de trame I dans une séquence de paquets RTP obtenus par tri ; rejetant les paquets RTP précédant le premier paquet RTP transportant des données de trame I recherché dans la séquence, et différenciant les paquets RTP transportant des données audio de ceux transportant des données vidéo selon un champ PID d'un paquet RTP en commençant à partir du premier paquet RTP transportant des données de trame I qui est recherché, et tramant les paquets RTP transportant des données audio et vidéo respectivement.

7. Le terminal client selon la revendication 6, comprenant :
une première unité de génération de signalisation configurée pour avoir une interaction de signalisation avec le serveur de flux multimédia afin d'établir la session de flux multimédia ;
une unité de réception configurée pour recevoir et mettre en antémémoire les paquets RTP;
une unité de traitement configurée pour trier et tramer les paquets RTP mis en antémémoire ; et
une première unité de stockage configurée pour générer le fichier et écrire les trames de données tramées dans le fichier généré.

8. Le terminal client selon la revendication 7, comprenant en outre :
une deuxième unité de stockage configurée pour stocker une estampille d'une trame de données qui est écrite dans le fichier en dernier quand une transmission est interrompue ; et
une deuxième unité de génération de signalisation configurée pour générer et envoyer une commande de lecture RTSP transportant l'estampille stockée ; et générer et envoyer une commande de lecture RTSP transportant un temps de commencement et un temps de fin d'une partie sélectionnée en vue d'un téléchargement dans le fichier source de flux multimédia.

9. Un système pour télécharger un fichier source de flux multimédia, comprenant un serveur de flux multimédia configuré pour transmettre à un terminal client des données de flux multimédia transportées par des paquets, RTP, de protocole de transport en temps réel par le biais d'une session de flux multimédia, où le système comprend également un terminal client comme décrit dans n'importe lesquelles des revendications 6 à 8.

10. Le système selon la revendication 9, où le serveur de flux multimédia comprend :
une première unité d'analyse configurée pour avoir une interaction de signalisation avec le terminal client afin d'établir une session de flux multimédia ; et
un module de transmission configuré pour obtenir des données de flux multimédia requises par le terminal client, transmettre les données de flux multimédia obtenues au terminal client en transportant lesdites données avec des paquets RTP.

11. Le système selon la revendication 10, où le serveur de flux multimédia comprend en outre :
une deuxième unité d'analyse configurée pour analyser la commande de lecture RTSP transportant l'estampille stockée afin d'obtenir l'estampille stockée ; et analyser la commande de lecture RTSP transportant un temps de commencement et un temps de fin d'une partie sélectionnée en vue d'un téléchargement dans le fichier source de flux multimédia afin d'obtenir le temps de commencement et le temps de fin d'une partie sélectionnée en vue d'un téléchargement dans le fichier source de flux multimédia ; et
une unité d'identification de données configurée pour déterminer des données de flux multimédia requises par le terminal client à transmettre selon l'estampille stockée ; et
déterminer des données de flux multimédia requises par le terminal client à transmettre selon le temps de commencement et le temps de fin d'une partie sélectionnée en vue d'un téléchargement dans le fichier source de flux multimédia.
